# EUROPÄISCHE PATENTANMELDUNG

(11) **EP 0 608 459 A1**
(43) Veröffentlichungstag der Anmeldung: **03.08.1994**
(21) Anmeldenummer: 93101370.0
(22) Anmeldetag: 29.01.1993
(51) Int. Cl.: G01N 27/28

(54) **Messvorrichtung an einer Fluidleitung**

(71) Anmelder: Pfannenschmidt, Erhard, Ing.grad., D-22147 Hamburg (DE)
(72) Erfinder: Pfannenschmidt, Erhard, Ing.grad., D-22147 Hamburg (DE)
(74) Vertreter: Dipl.-Ing. H. Hauck, Dipl.-Ing. E. Graalfs, Dipl.-Ing. W. Wehnert, Dr.-Ing. W. Döring, Dr.-Ing. N. Siemons

(57) **Zusammenfassung**

Meßvorrichtung mit einem an einem Gefäß angeschlossenen oder im Zuge einer Leitung angeordneten Meßgebergehäuse, daß eine Durchbohrung aufweist, in die quer dazu verlaufend eine Aufnahmebohrung mündet, in der ein Meßgeber dichtend, jedoch entfernbar angebracht ist, und einem Verschlußmittel im Gehäuse, das in Schließstellung die Durchbohrung von der Aufnahmebohrung trennt, wobei eine Dichtungsstange in der der Aufnahmebohrung gegenüberliegenden Wand koaxial zur Aufnahmebohrung dichtend und verschiebbar gelagert ist und am freien Ende eine Dichtungsanordnung aufweist, mit der das innenliegende Ende der Aufnahmebohrung dichtend verschlossen werden kann, und der Querschnitt der Durchbohrung und der Dichtungsstange so bemessen ist, daß ein ausreichender Strömungsquerschnitt verbleibt, wenn die Dichtungsstange die Aufnahmebohrung abdichtet.

## Beschreibung

Die Erfindung bezieht sich auf eine Meßvorrichtung an einem Gefäß für ein Fluid, an einer Fluidleitung oder dergleichen nach dem Oberbegriff des Patentanspruchs 1.

Es ist üblich, Behälter zur Aufnahme von flüssigen bzw. fließfähigen Produkten (Fluide) mit Meßwertgebern auszustatten, die zum Beispiel den Druck, die Temperatur oder ähnliche physikalische Werte messen. Die Meßwertgeber sind häufig an der Wandung des Behälters angebracht, und eine Signalleitung ist dichtend durch die Wandung nach außen geführt. Zumeist sind die Meßwertgeber so angebracht, daß sie nur schwer zugänglich sind, insbesondere wenn sich Produkt im Behälter befindet. Bei einem Ausfall oder einer Servicenotwendigkeit für den Meßwertgeber muß daher das Produkt aus dem Behälter entfernt werden und der Behälter so lange leer bleiben, bis die Reparatur- oder Servicearbeiten abgeschlossen sind.

Ähnliche Probleme existieren bei Meßvorrichtungen, die an Strömungsmittelleitungen angebracht sind. Es ist bereits bekanntgeworden, einen Meßwertgeber in einem Kugelhahn zu integrieren. Der Meßwertgeber durchsetzt eine Bohrung im Kugelküken koaxial zur Drehachse des Kugelkükens. Zum Austausch des Meßwertgebers wird das Kugelküken in die Schließstellung gebracht, so daß Produkt aus der Leitung nicht austreten kann, wenn der Meßwertgeber entfernt wird.

Der Nachteil der bekannten Vorrichtung besteht darin, daß während der Austauschzeit der Kugelhahn die Leitung vollständig abschließt. Wenn das Leitungssystem von Kreiselpumpen beaufschlagt wird, bereitet der Leitungsverschluß keine Probleme. Anders ist hingegen die Lage bei der Verwendung von Kolbenpumpen. Es kommt zu einer starken, zumeist unzulässigen Druckerhöhung, so daß ein Austausch bei auftrechterhaltener Strömung in der Leitung bzw. einer Unterbrechung der Strömung bei eingeschalteten Pumpen nicht in Frage kommt.

Selbst wenn jedoch der Kugelhahn ohne Gefahr für das Leitungssystem geschlossen werden kann, gelangt Fluid in einer Menge nach außen, die dem Volumen der Durchbohrung des Kugelkükens entspricht. Handelt es sich bei dem Fluid um aggressive und/oder giftige Medien, ist der Einsatz der bekannten Vorrichtung auch aus diesem Grunde problematisch.

Der Erfindung liegt die Aufgabe zugrunde, eine Meßvorrichtung an einem Gefäß für ein Fluid, an einer Fluidleitung oder dergleichen zu schaffen, bei der das Entfernen des Fluids aus einem Gefäß oder die Unterbrechung eines in einer Leitung strömenden Fluids vermieden werden kann.

Diese Aufgabe wird gelöst durch die Merkmale des Patentanspruchs 1.

Der Meßwertgeber wird in den bekannten Fällen zumeist in einer Aufnahmebohrung dichtend aufgenommen, die in einer das Gefäß oder die Leitung begrenzenden Wand geformt ist. Bei der erfindungsgemäßen Meßvorrichtung ist eine Dichtungsstange vorgesehen, die koaxial zur Aufnahmebohrung in der der Aufnahmebohrung gegenüberliegenden Wand dichtend und verschiebbar gelagert ist. Die Dichtungsstange weist am freien Ende eine Dichtungsanordnung auf, mit der das innenliegende Ende der Aufnahmebohrung für den Meßwertgeber dichtend verschlossen werden kann, wenn die Dichtungsstange gegen das zugewandte Ende der Aufnahmebohrung verstellt wird. Für diesen Zweck kann der Dichtungsstange ein Verstellantrieb zugeordnet werden, beispielsweise ein von einem Handrad betätigbarer Spindeltrieb. Es versteht sich, daß auch ein hydraulischer oder pneumatischer Verstellzylinder verwendet werden kann. Wenn der Verstellantrieb über eine Kupplung lösbar mit der Dichtungsanordnung verbunden und vom Gefäß demontierbar ist, braucht die Meßvorrichtung nur zu Überprüfungszwecken mit dem Verstellantrieb verbunden zu werden. Falls mehrere Meßvorrichtungen vorgesehen sind, vermindert dies den Aufwand beträchtlich. Die Kupplung kann in einfacher Weise mittels ineinandergreifender Erhebung und Vertiefung von Dichtungsstange und Spindeltrieb und einer die Erhebung in der Vertiefung fixierende Schraubverbindung zwischen Dichtungsstange und Spindeltrieb realisiert sein. Für eine Demontierbarkeit hat der Verstellantrieb ferner vorteilhaft eine Halterung, die mittels einer lösbaren Schraubverbindung am Gefäß befestigt ist.

Die Dichtungsanordnung an der Dichtungsstange kann topfartig ausgebildet sein und über das zugeordnete innere Ende des Meßwertgebers gestülpt werden, wenn dieser etwas in das Gefäß bzw. die Leitung hineinsteht. Es wird indessen bevorzugt, wenn nach einer Ausgestaltung der Erfindung das innere Ende des Meßwertgebers in der Aufnahmebohrung versenkt angeordnet ist. In diesem Fall kann die Dichtungsanordnung kolbenartig ausgebildet sein und in das innere Ende der Aufnahmebohrung zumindest teilweise hineintauchen, um sie sicher abzudichten. In diesem Zusammenhang sieht eine Ausgestaltung der Erfindung vor, daß der freie innere Endabschnitt der Aufnahmebohrung im Durchmesser vergrößert ist und sich vorzugsweise konisch zum Inneren des Gefäßes bzw. der Leitung oder dergleichen erweitert und die Dichtungsanordnung so geformt ist, daß sie mit der Wandung und ggf. mit dem Absatz der Aufnahmebohrung in dichtendem Eingriff bringbar ist.

Die erfindungsgemäße Vorrichtung ist im Fall von Gefäßen besonders dann vorteilhaft einzusetzen, wenn der Durchmesser des Gefäßes nicht zu groß ist, weil andernfalls eine relativ lange Dichtungsstange notwendig wird, die im Normalbetrieb aus dem Gefäß hervorsteht. Insbesondere ist jedoch die Erfindung für Meßwertgeber an Fluidleitungen geeignet. In diesem Zusammenhang sieht eine Ausgestaltung der Erfindung vor, daß ein Meßgebergehäuse vorgesehen ist, das im Zuge einer Leitung anbringbar ist und eine Durchbohrung aufweist, in die die quer dazu verlaufende Aufnahmebohrung mündet und der Abschnitt der Durchbohrung und der Dichtungsstange so bemessen sind, daß ein ausreichender Strömungsquerschnitt verbleibt, wenn die Dichtungsstange die Aufnahmebohrung abdichtet. Das Meßgebergehäuse kann in eine Leitung eingeflanscht werden, und seine Durchbohrung bildet somit einen Teil der Leitung. Dabei ist sicherzustellen, daß auch bei geschlossener Dichtungsstange ein ausreichender Strömungsquerschnitt verbleibt, damit das Fluid unter normalen Bedingungen weiterströmen kann.

Es ist denkbar, die Durchbohrung mit einem Durchmesser zu verformen, der dem Leitungsdurchmesser entspricht. In diesem Fall ist die Dichtungsstange mit einer Einschnürung zu versehen. Eine gewisse Drosselwirkung läßt sich jedoch dadurch nicht vermeiden. Es ist daher nach einer Ausgestaltung der Erfindung vorteilhafter, wenn die Durchbohrung im Bereich der Dichtungsstange eine Erweiterung aufweist.

Das Meßgebergehäuse kann einteilig geformt werden. Ist jedoch eine Erweiterung der Durchbohrung im Bereich der Dichtungsstange erwünscht, bereitet es fertigungstechnisch einen gewissen Aufwand, die Durchbohrung herzustellen. Daher sieht eine Ausgestaltung der Erfindung vor, daß die Durchbohrung an einem Ende durch einen Schraubring gebildet ist, der in das Meßgebergehäuse geschraubt ist.

Die Dichtungsstange kann eine Prüfbohrung haben, die von ihrem freien Ende bis zu einer verschließbaren Prüföffnung in einem außerhalb der Wand angeordneten Abschnitt verläuft. Mittels der Prüfbohrung kann der Meßgeber inline geprüft werden, indem die Dichtungsstange gegen den Meßgeber gefahren und die Prüföffnung geöffnet wird. Dafür ist in der Prüföffnung bevorzugt ein Verschlußstopfen vorgesehen. Schließlich kann die Prüfbohrung vorteilhaft durch eine Schraube zum Halten der Dichtungsanordnung am freien Ende der Dichtungsstange verlaufen.

Die Erfindung wird nachfolgend anhand von Zeichnungen näher erläutert.
- Fig. 1: zeigt die Seitenansicht einer Vorrichtung nach der Erfindung.
- Fig. 2: zeigt einen Längsschnitt durch die Vorrichtung nach Fig. 1.
- Fig. 3: zeigt die Ansicht der Vorrichtung nach Fig. 1 in Richtung Pfeil 3.
- Fig. 4: zeigt einen Schnitt durch die Vorrichtung nach Fig. 1 entlang der Linie 4-4.
- Fig. 5: zeigt eine ähnliche Ansicht wie Fig. 2, jedoch in geöffneter Position der Dichtungsstange.
- Fig. 6: zeigt eine ähnliche Darstellung wie Fig. 2, jedoch mit einer abgewandelten Abdichtung für die Dichtungsstange.
- Fig. 7: zeigt eine ähnliche Darstellung wie Fig. 2, jedoch mit einer abgewandelten Dichtungsstange und einem anderen Verstellantrieb.
- Fig. 8: zeigt die Vorrichtung gemäß Fig. 7 in einem Teilschnitt entlang der Linie 8-8.
- Fig. 9: zeigt die Vorrichtung nach Fig. 7 in einem Schnitt entlang der Linie 9-9.
- Fig. 10: zeigt das Detail "10" der Vorrichtung in Fig. 8 mit einem Prüfanschluß.

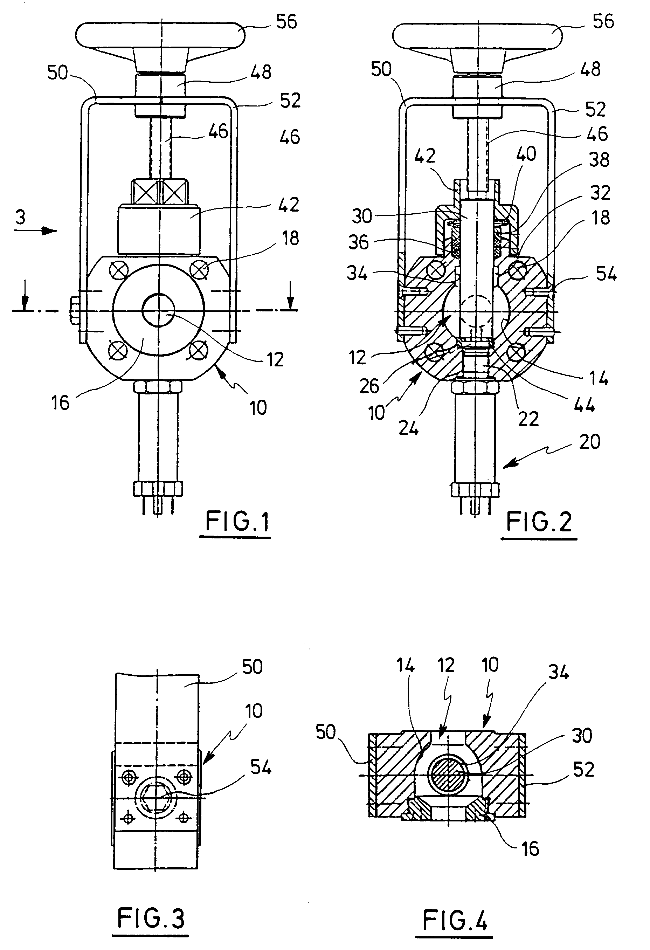

Ein Meßgebergehäuse 10 hat in der einen Ebene kreisförmige Kontur, die jedoch mit Abflachungen versehen ist. Senkrecht dazu hat das Gehäuse 10 im Querschnitt annähernd Rechteckform, wie aus den Figuren 3 und 4 hervorgeht. Wie ebenfalls aus Fig. 4 hervorgeht, hat das Gehäuse 10 eine axiale Durchbohrung 12, die innerhalb des Gehäuses bei 14 im Durchmesser erweitert ist. Auf einer Seite des Gehäuses 10 ist die Durchbohrung 12 durch einen Ring 16 gebildet und begrenzt, die in einen Innengewindebohrungsabschnitt des Gehäuses 10 eingeschraubt ist. Die Enden der Durchbohrung 12 haben mithin einen gleichen Durchmesser, der dem Durchmesser einer Leitung entspricht, in der das Gehäuse 10 eingeflanscht werden kann. Zu diesem Zweck weist das Gehäuse 4 Befestigungsbohrungen 18 auf, die mit entsprechenden Bohrungen in Flanschen an den Leitungen (nicht gezeigt) ausgerichtet werden können.

Ein Meßgeber 20 weist einen Kopf 22 auf, der dichtend in einer Aufnahmebohrung 24 des Gehäuses 10 angebracht ist. Die Aufnahmebohrung 24 verläuft senkrecht zur Durchbohrung 12 und hat einen im Durchmesser erweiterten Abschnitt 26, der sich konisch in Richtung Durchbohrung 12 erweitert.

Eine Dichtungsstange 30 von zylindrischer Form erstreckt sich durch eine Durchbohrung 32 des Gehäuses 10, die zur Aufnahmebohrung 24 koaxial ist. Sie hat einen zur Durchbohrung 12 hin liegenden erweiterten Bohrungsabschnitt 34 und einen darüberliegenden ebenfalls erweiterten Bohrungsabschnitt, in dem eine Stopfbuchsendichtung 36 für die Stange 30 aufgenommen ist, gegen die ein Druckring 38 anliegt, der seinerseits von einer Tellerfeder 40 druckbeaufschlagt ist. Die Tellerfeder 40 stützt sich an der Innenseite einer gestuften Hülse 42 ab, die auf einen Bund des Gehäuses 10 aufschraubbar ist, um den Druckring 38 mit Druck zu beaufschlagen.

In einer Nut hält die Dichtungsstange 42 einen konischen Dichtungsring 44, der so bemessen ist, daß er den erweiterten Abschnitt 26 der Aufnahmebohrung 24 wirksam abdichtet, wenn er mit Hilfe der Dichtungsstange 30 in die Aufnahmebohrung 26 hineinverstellt wird.

Die Dichtungsstange 30 ist am äußeren Ende mit einer Gewindespindel 46 versehen, die mit einer Spindelmutter 48 zusammenwirkt. Die Spindelmutter 48 ist mit zwei rechtwinklig gebogenen Flachstäben 50, 52 verbunden, die an den abgeflachten Außenseiten des Gehäuses 10 anliegen und mit dem Gehäuse 10 verschraubt sind, wie etwa bei 54 angedeutet. Am äußeren Ende der Spindel 46 ist ein Handrad 56 angebracht.

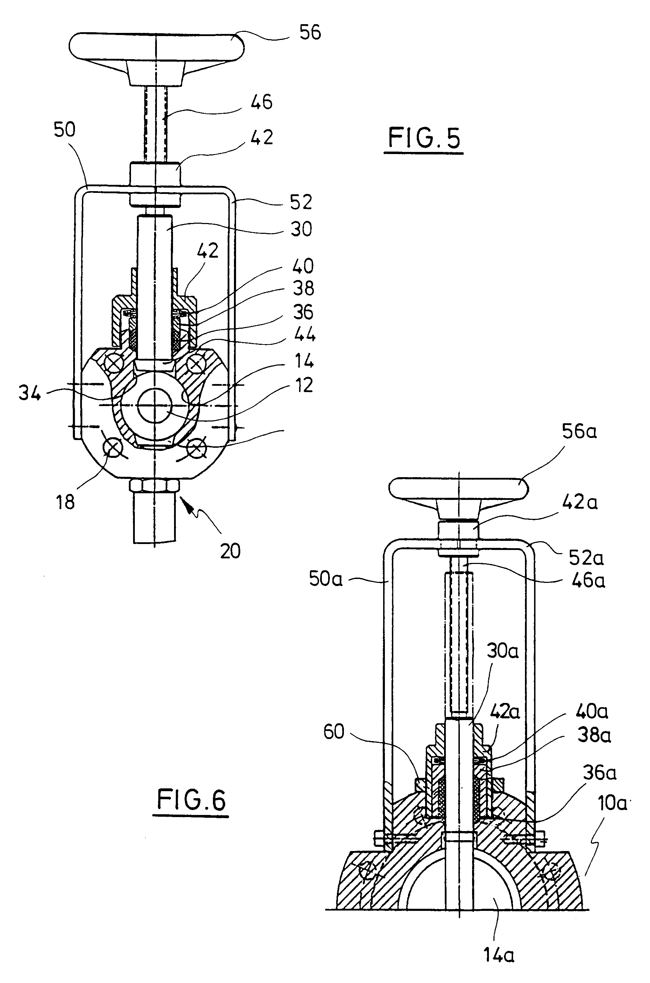

In Fig. 5 ist die normale Betriebsstellung der gezeigten Meßgebervorrichtung dargestellt, in der sich die Dichtungsstange 30 in der maximal ausgefahrenen Position befindet und die Ringdichtung 44 sich in dem Bohrungsabschnitt 34 befindet. Das Produkt durchströmt die Leitung und mithin auch das Gehäuse 10 über die Durchbohrung 12. Mit Hilfe des Meßgebers 20 kann zum Beispiel der Druck in der nicht gezeigten Leitung gemessen werden. Ist nun ein Austausch des Meßwertgebers 20 erforderlich, wird mit Hilfe des Handrades 56 die Dichtungsstange 30 in die in Fig. 2 dargestellte Position verstellt, in der der Dichtring 44 in den konischen Bohrungsabschnitt 26 dichtend eintaucht, so daß bei einem Entfernen der Meßgebervorrichtung 20 kein Medium austreten kann. Das Medium kann im übrigen aufgrund der Erweiterung 14 weiterfließen, wobei diese Erweiterung im Querschnitt mindestens dem Durchströmquerschnitt der Leitung entspricht. Ist das Auswechseln des Meßgebers 20 beendet, wird die Dichtungsstange mit Hilfe des Handrades 56 und der Gewindespindel 46 wieder in die in Fig. 5 gezeigte Stellung verfahren. Die Stopfbuchsendichtung 36 sorgt dafür, daß die Durchbohrung 12 auch im Bereich der Dichtungsstange 30 wirksam abgedichtet ist.

Eine alternative Form der Stopfbuchsendichtung ist in Fig. 6 dargestellt, in der gleiche Teile wie in den Figuren 1 bis 5 mit gleichen Bezugszeichen versehen sind, denen ein a hinzugefügt ist.

Bei der Ausführungsform nach Fig. 6 sind die Flachstäbe 50a, 52a in einem oberen ausgenommenen Bereich des Gehäuses 10a angebracht, so daß sie die äußeren Abmessungen des Gehäuses 10 in dieser Richtung nicht vergrößern. Die abgestufte Hülse 42a ist in eine Innengewindebohrung des Gehäuses 10a eingeschraubt. Sie wirkt über die Tellerfeder 40a und den Druckring 38a auf die Stopfbuchsendichtung 36a. Eine Kontermutter 60 ist auf die Hülse 42a geschraubt und verhindert, daß sie sich ungewollt löst.

In Fig. 6 ist die Abdichtungsstellung der Dichtungsstange 30a in durchgezogenen Linien dargestellt. Die normale oder Öffnungsstellung ist strichpunktiert angedeutet.

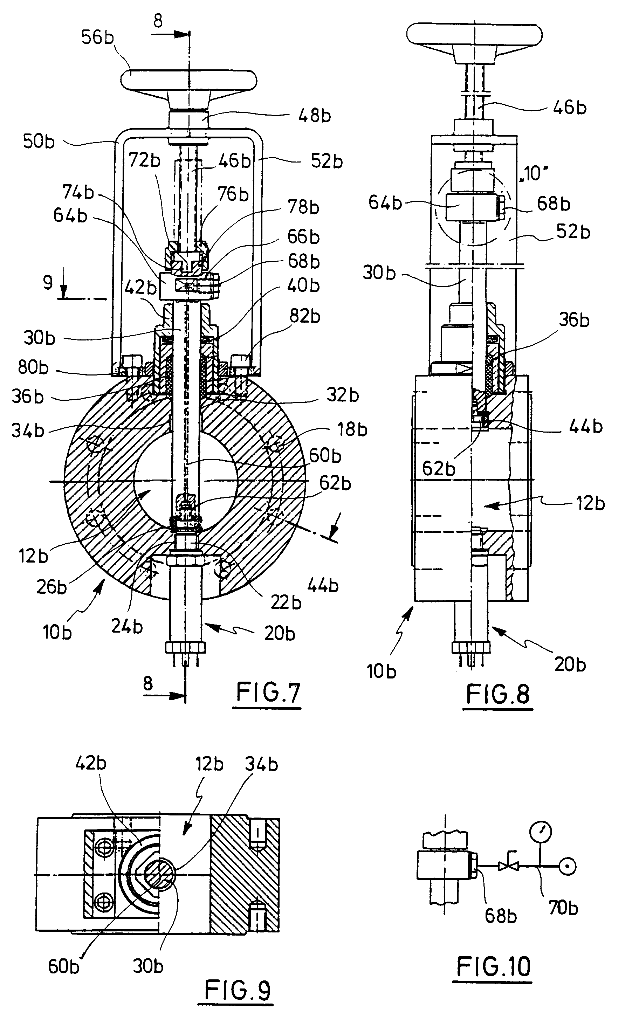

Bei der weiteren alternativen Vorrichtung gemäß Fig. 7 bis 10 sind entsprechende Teile wie in den Figuren 1 bis 6 mit gleichen Bezugszeichen versehen, denen ein b hinzugefügt ist.

Das Gehäuse 10b hat bei dieser Variante eine Durchbohrung 12b konstanten Durchmessers. Die Dichtungsstange 30b ist mit einer Prüfbohrung 60b versehen, welche durch eine Schraube 62b zum Halten der Dichtungsanordnung 44b verläuft und am freien Ende der Dichtungsstange mündet. In entgegengesetzter Richtung erstreckt sich die Prüfbohrung 60b bis zu einem außerhalb der Wand des Gehäuses 10b angeordneten Anschlußabschnitt 64b der Dichtungsstange 30b. Dort befindet sich eine Prüföffnung 66b der Prüfbohrung 60b, die mittels eines Verschlußstopfens 68b verschlossen ist. Die Fig. 10 zeigt, daß bei Entfernung des Verschlußstopfens 68b eine Prüfeinrichtung 70b an die Prüföffnung 70b für Wiederholungsprüfung an die Prüföffnung anschließbar ist.

Gemäß Fig. 7 kann der Meßgeber auf Funktion überprüft werden, indem die Dichtungsstange 30b gegen den Kopf 22b des Meßgebers gefahren wird. Dann kann der Verschlußstopfen 68b ausgeschraubt und gemäß Fig. 10. über einen Druckentlastungshahn die Meßanordnung angeschlossen werden. Unabhängig vom Medium, welches die Meßvorrichtung durchströmt, kann dann der Meßgeber 20b geprüft werden. Bei dieser Vorrichtung ist somit sowohl eine Prüfung des Meßgebers, als auch dessen Austausch bei durchströmendem Produkt möglich.

Nach Auswechseln des Meßgebers 20b bzw. Verschließen der Prüfbohrung 60b wird die Dichtungsstange 30b durch Betätigen der Gewindespindel 46b mittels des Handrades 56b bis zum Anschlag wieder hochgefahren, damit die Messung des durchströmenden Produktes ungestört erfolgen kann (vgl. Fig. 8).

Die Fig. 7 und 8 zeigen, daß die Gewindespindel 46b und die Dichtungsstange 30b mit einer Erhebung 72b bzw. Vertiefung 74b ineinandergreifen. Ferner ist die Gewindespindel 46b mit einer Überwurfmutter 76b versehen, die einen endseitigen Rand der Gewindespindel übergreift und mit einem Gewinde 78b der Dichtungsstange 30b verschraubt ist. Erhebung 72b, Vertiefung 74b, Überwurfmutter 76b und Gewinde 78b bilden eine Kupplung, die der lösbaren Verbindung der Gewindespindel 46b mit der Dichtungsstange 42b dient.

Überdies bilden die Flachstäbe 50b und 52b zusammen mit einem daran gehäuseseitig befestigten Ringflansch 80b eine Halterung, die über Zylinderschrauben 82b lösbar mit dem Gehäuse 10b verbunden ist. Nach Lösen der Kupplung und der Zylinderschrauben 82b ist die Verstelleinrichtung von der Meßvorrichtung lösbar und kann mit einer anderen Meßvorrichtung verbunden werden.

## Patentansprüche

1. Meßvorrichtung mit einem an einem Gefäß angeschlossenen oder im Zuge einer Leitung angeordneten Meßgebergehäuse, daß eine Durchbohrung aufweist, in die quer dazu verlaufend eine Aufnahmebohrung mündet, in der ein Meßgeber dichtend, jedoch entfernbar angebracht ist, und einem Verschlußmittel im Gehäuse, das in Schließstellung die Durchbohrung von der Aufnahmebohrung trennt, dadurch gekennzeichnet, daß eine Dichtungsstange (30, 30a) in der der Aufnahmebohrung (24) gegenüberliegenden Wand koaxial zur Aufnahmebohrung (24) dichtend und verschiebbar gelagert ist und am freien Ende eine Dichtungsanordnung (44) aufweist, mit der das innenliegende Ende der Aufnahmebohrung (24) dichtend verschlossen werden kann, und der Querschnitt der Durchbohrung (12) und der Dichtungsstange (30) so bemessen ist, daß ein ausreichender Strömungsquerschnitt verbleibt, wenn die Dichtungsstange (30) die Aufnahmebohrung (24) abdichtet.

2. Meßvorrichtung nach Anspruch 1, dadurch gekennzeichnet, daß die Dichtungsstange (30, 30a) mit einem Verstellantrieb (56, 48, 46, 56a, 58a, 46a) versehen ist.

3. Meßvorrichtung nach Anspruch 2, dadurch gekennzeichnet, daß der Verstellantrieb ein von einem Handrad (56, 56a) betätigbarer Spindeltrieb (48, 46, 48a, 46a) ist.

4. Meßvorrichtung nach Anspruch 2 oder 3, dadurch gekennzeichnet, daß der Verstellantrieb über eine Kupplung (72b, 74b, 76b, 78b) lösbar mit der Dichtungsstange (30b) verbunden und vom Gefäß (10b) demontierbar ist.

5. Meßvorrichtung nach Anspruch 4, dadurch gekennzeichnet, daß die Kupplung eine ineinandergreifende Erhebung (72b) und Vertiefung (74b) von Dichtungsstange (30b) und Spindeltrieb (46b) und eine die Erhebung in der Vertiefung fixierende Schraubverbindung (76b, 78b) zwischen Dichtungsstange und Spindeltrieb aufweist.

6. Meßvorrichtung nach anspruch 4 oder 5, dadurch gekennzeichnet, daß eine Halterung (50b, 52b, 80b) des Verstellantriebs mittels einer lösbaren Schraubverbindung (82b) am Gefäß (10b) befestigt ist.

7. Meßvorrichtung nach einem der Ansprüche 1 bis 6,dadurch gekennzeichnet, daß das innere Ende (22) des Meßgebers (20) versenkt in der Aufnahmebohrung (24) angeordnet ist.

8. Meßvorrichtung nach Anspruch 7, dadurch gekennzeichnet, daß der freie innere Endabschnitt (26) der Aufnahmebohrung (24) im Durchmesser vergrößert ist und sich vorzugsweise konisch zum Inneren des Gefäßes bzw. der Leitung oder dergleichen erweitert und die Dichtungsanordnung (44) so geformt ist, daß sie mit der Wandung der Erweiterung (26) und vorzugsweise auch mit dem Absatz der Aufnahmebohrung (24) in dichtendem Eingriff bringbar ist.

9. Meßvorrichtung nach Anspruch 8, dadurch gekennzeichnet, daß die Durchbohrung (12) im Bereich der Dichtungsstange (12) eine Erweiterung (14) aufweist.

10. Meßvorrichtung nach Anspruch 9, dadurch gekennzeichnet, daß die Durchbohrung (12) an einem Ende durch einen Schraubring (16) gebildet ist, der in das Meßgebergehäuse (10) geschraubt ist.

11. Meßvorrichtung nach einem der Ansprüche 1 bis 10, dadurch gekennzeichnet, daß die Dichtungsstange (30b) eine Prüfbohrung (60b) hat, die vom dem freien Ende der Dichtungsstange bis zu einer verschließbaren Prüföffnung (66b) in einem außerhalb des Gehäuses (10b) angeordneten Abschnitt der Dichtungsstange (30b) verläuft.

12. Meßvorrichtung nach Anspruch 11, dadurch gekennzeichnet, daß zum Verschließen der Prüföffnung ein Verschlußstopfen (68b) vorgesehen ist.

13. Meßvorrichtung nach Anspruch 11 oder 12, dadurch gekennzeichnet, daß sich die Prüfbohrung (60b) durch eine Schraube (62b) zum Halten der Dichtungsanordnung (44b) am freien Ende der Dichtungsstange (30b) erstreckt.
